# FASCICULE DE BREVET EUROPEEN

(11) **EP 0 572 634 B1**
(45) Date de publication et mention de la délivrance du brevet: **03.09.1997**
(21) Numéro de dépôt: 93901787.7
(22) Date de dépôt: 13.11.1992
(51) Int. Cl.: F25J 3/04, C01B 13/02, C01B 21/04

(54) **PROCEDE DE PRODUCTION COMBINEE ET A DEBITS REGLABLES D'AZOTE ET D'OXYGENE**
VERFAHREN ZUR KOMBINIERTEN HERSTELLUNG VON STICKSTOFF UND SAUERSTOFF MIT REGELBAREM DURCHFLUSS
COMBINED ADJUSTABLE-FLOW RATE NITROGEN AND OXYGEN PRODUCTION METHOD

(30) Priorité: 26.11.1991 FR 9114546
(43) Date de publication de la demande: 08.12.1993
(73) Titulaire: L'AIR LIQUIDE, SOCIETE ANONYME POUR L'ETUDE ET L'EXPLOITATION DES PROCEDES GEORGES CLAUDE, 75321 Paris Cédex 07 (FR)
(72) Inventeur: ENGLER, Yves, F-94300 Vincennes (FR); PETRIE, Wilfrid, F-75003 Paris (FR); MONEREAU, Christian, F-75011 Paris (FR)
(74) Mandataire: Le Moenner, Gabriel
(86) Numéro de dépôt international: FR9201058
(87) Numéro de publication internationale: WO9311395

(56) Documents cités:
- EP-A- 0 456 575
- FR-A- 2 280 043
- GB-A- 2 021 748
- GB-A- 2 190 477
- H. Hausen, H. Linde, "Tieftemperaturtechnik", deuxième édition, Springer 1985, page 323

## Description

La présente invention concerne la production combinée et à débits réglables d'azote et d'oxygène, du genre mettant en oeuvre une séparation initiale d'air produisant un débit d'azote substantiellement pur et un débit de gaz résiduaires enrichis en oxygène, dans lequel on traite lesdits gaz résiduaires par adsorption délivrant un débit réglable d'oxygène substantiellement pur, et dans lequel, avant l'adsorption, on soutire un débit excédentaire des gaz résiduaires si la demande en oxygène est inférieure à une valeur nominale. Un procédé de ce genre est connu de GB-A-2.190.477. Cette production qui s'effectue généralement par distillation cryogénique conduit nécessairement à générer des débits d'azote et d'oxygène qui sont dans des proportions relatives bien déterminées, le débit d'azote étant de l'ordre de 2,5 fois le débit d'oxygène sauf, bien entendu, à prévoir deux unités de séparation qui sont indépendantes l'une de l'autre, ce qui est très onéreux.

Le but de la présente invention est d'assurer la production combinée et à débits réglables d'azote et d'oxygène à partir d'une séparation initiale d'air, avec adjonction de moyens supplémentaires de séparation présentant des coûts modérés d'investissement et de maintenance, et cet objectif de l'invention est atteint en ce que, avant l'adsorption, on adjoint un débit complémentaire d'air aux gaz résiduaires si la demande en oxygène est supérieure à une valeur nominale. On comprend que cette disposition, qui reprend pour les traiter, des gaz résiduaires déjà enrichis en oxygène est moins onéreuse qu'un traitement supplémentaire d'air atmosphérique, tout en présentant une grande souplesse de réglage des débits respectifs d'azote et d'oxygène.

Le procédé selon l'invention est décrit dans la revendication indépendante 1.

Selon une forme de mise en oeuvre, le traitement par adsorption s'effectue à la pression des gaz résiduaires issus de la séparation initiale d'air, tandis que la régénération de l'adsorbeur s'effectue à pression nettement inférieure, le cas échéant sous vide si la pression des gaz résiduaires de la séparation initiale est peu supérieure à la pression atmosphérique. Selon une variante, on recomprime les gaz résiduaires de la séparation initiale d'air avant de les traiter par adsorption.

Généralement, la séparation initiale d'air est une distillation cryogénique précédée d'une dessiccation-décarbonatation et dans un tel cas :
- soit on traite une partie seulement des gaz résiduaires par adsorption, le restant étant utilisé en tant que vecteur gazeux de régénération de la dessiccation-décarbonatation de l'air destiné à la distillation cryogénique ;
- soit au moins une partie des gaz résiduaires issus de la distillation cryogénique est utilisée pour la régénération de la dessiccation-décarbonatation avant d'être traitée par adsorption et, avantageusement, dessiccation-décarbonatation;
- soit au moins une partie des gaz résiduaires issus de la distillation cryogénique est directement traitée par adsorption, l'oxygène issu de l'adsorption étant utilisé en tant que vecteur gazeux de régénération de la dessiccation-décarbonatation de l'air destiné à la distillation cryogénique.

L'invention concerne également une installation destinée à mettre en oeuvre le procédé ci-dessus, comme décrit dans la revendication 8.

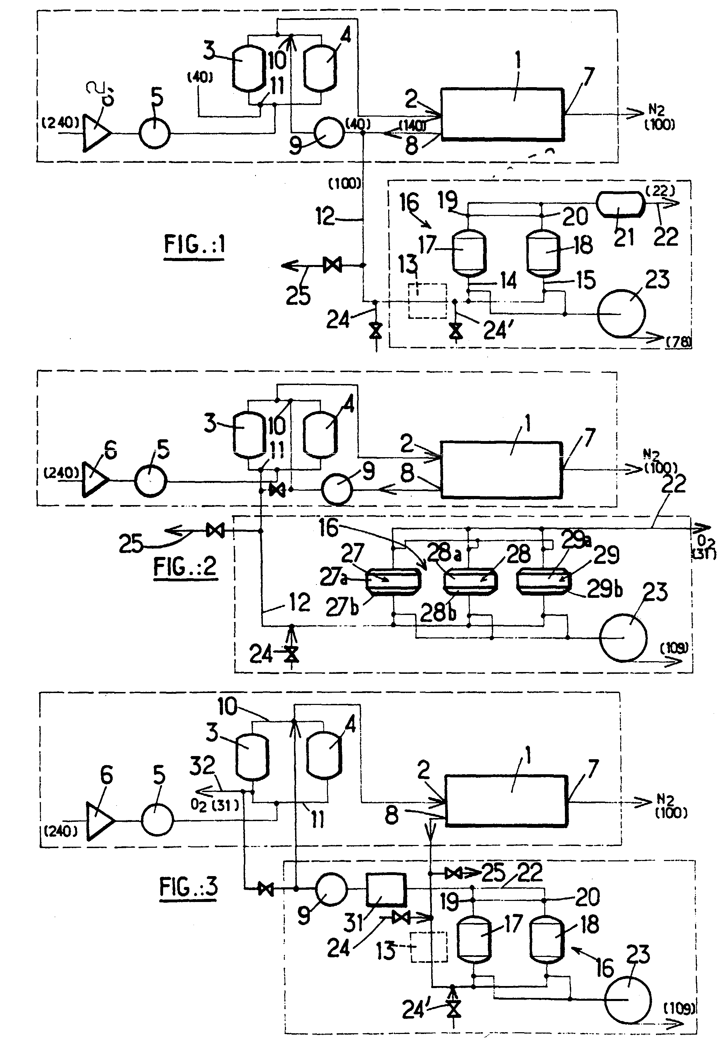

L'invention est maintenant illustrée en référence aux dessins annexés dans lesquels les figures 1 à 3 sont trois variantes de réalisation d'une installation de production selon l'invention.

En se référant à la figure 1, une installation comporte une unité de production par distillation cryogénique 1 dont une entrée d'air à séparer 2 est raccordée via un dessiccateur-décarbonateur double 3, 4, à un. refroidisseur 5 en aval d'un compresseur d'air atmosphérique 6. De façon usuelle, lorsqu'un dessiccateur-décarbonateur 3 (4) est en opération, l'autre 4 (3) est en régénération par un gaz vecteur chaud.

L'unité de distillation 1 comporte une sortie de production d'azote pur 7 et une sortie de gaz résiduaires 8, ayant une teneur en oxygène entre 30 et 60 %, par exemple de l'ordre de 43 %. La sortie de gaz résiduaires 8 est raccordée d'une part via un réchauffeur 9 à une "sortie" 10 d'un dessiccateur-décarbonateur 3 ou 4 en cours de régénération, dont une "entrée" 11 constitue la sortie du vecteur gazeux de régénération chargé en eau et en gaz carbonique, d'autre part via un conduite 12 incorporant un compresseur éventuel 13 à l'une ou l'autre entrée 14, 15 d'une unité de séparation par adsorption 16 à deux adsorbeurs 17, 18, à tamis moléculaires adsorbant préférentiellement l'azote, dont l'une ou l'autre sortie 19, 20, débouche dans un réservoir-tampon 21, sur lequel est branchée une conduite de production d'oxygène 22. De façon usuelle, l'un des adsorbeurs 17 (18) est en opération, tandis que l'autre 18 (17) est en cours de régénération qui s'effectue par dépressurisation, le cas échéant, à l'aide d'une pompe à vide 23 branchée alternativement sur l'une ou l'autre "entrée" 14, 15. Bien entendu, cette unité d'adsorption est représentée schématiquement avec deux adsorbeurs seulement et sans le jeu de vannes de commutation de cycle, et il faut bien comprendre que, généralement, on met en oeuvre un plus grand nombre d'adsorbeurs, dont un ou plusieurs sont soit en production, soit en dépressurisation, soit en repressurisation.

De l'air additionnel est adjoint à l'unité d'adsorption soit en 24 en amont du compresseur éventuel 13, soit en 24' en aval de ce même compresseur 13. Au contraire, on peut soutirer en 25 un excès de gaz résiduaires.

L'installation fonctionne de la façon suivante :

Un débit d'air (240 Nm³) est d'abord comprimé (6-7 bar) en 6, puis refroidi en 5, desséché-décarbonaté en 3 ou 4 avant d'être introduit en 2 dans l'unité de distillation 1. Il en sort en 7 un débit (100 Nm³) d'azote substantiellement pur, et en 8 un débit de gaz résiduaires (140 Nm³), dont la teneur molaire en oxygène est de l'ordre de 40 à 60 %, qui est divisé en un débit (40 Nm³) de gaz vecteur de régénération du dessiccateur-décarbonateur 3 (4), dirigé d'abord vers le réchauffeur 9, et un débit de gaz résiduaires à traiter (100 Nm³) qui est transféré via la conduite 12, le compresseur éventuel 13, à une entrée 14, 15, de l'unité de traitement par adsorption 16, produisant un débit d'oxygène substantiellement pur (22 Nm³) en 22 et un débit de gaz résiduaires (78 Nm³) rejetés à l'atmosphère, le cas échéant, via la pompe à vide 23.

En supposant que le débit d'azote (100 Nm³) sortant en 7 est le débit souhaité, il se peut que le débit d'oxygène sortant en 22 (22 Nm³) soit également suffisant. Dans ce cas, on n'injecte en 24, 24' aucun débit d'air supplémentaire.

Au contraire, si le débit d'oxygène en 22 est insuffisant ou trop important, on injecte en 24, 24' un débit complémentaire d'air, ou on soutire en 25 un débit excédentaire de gaz résiduaires respectivement, tel que le débit d'oxygène sortant en 22 soit celui souhaité, ce qui ne modifie en rien le fonctionnement de l'unité de séparation par distillation 1.

En se référant à la figure 2, on voit les mêmes moyens désignés généralement par les mêmes chiffres de référence, à ces différences près que la totalité ou une part substantielle des gaz résiduaires issus en 8 (140 Nm³) de l'installation de distillation est envoyée via le réchauffeur 9 à la sortie 10 du dessiccateur-décarbonateur en cours de régénération 3 (4) dont l'entrée 11 délivre ce débit total via la conduite 12 à l'unité d'adsorption ici constituée de trois adsorbeurs 27, 28, 29 incorporant un tamis moléculaire (27a, 28a, 29a) associé, en amont, à un lit d'alumine (27b, 28b, 29b) pour l'arrêt de l'eau et du gaz carbonique repris dans le dessiccateur-décarbonateur 3, 4.

En se référant à la figure 3, où les mêmes éléments sont désignés par les mêmes chiffres de référence que sur la figure 1, la régénération du dessiccateur-décarbonateur 3, 4, est ici assurée par au moins une partie du débit d'oxygène produit en 22 qui, le cas échéant, recomprimé en 31 et réchauffé en 9, est envoyé à une sortie 10 du dessiccateur-décarbonateur en cours de régénération 3 (4), dont l'entrée est alors raccordée à une conduite de production d'oxygène légèrement humidifié 32. On note que les chiffres entre parenthèses représentent les débits traités à partir d'un débit d'air de 240 Nm³. Comme précédemment, si le débit d'oxygène en 32 (31 Nm³) s'avère insuffisant, on injecte un débit d'air additionnel en 24 ou 24', pour être traité par l'unité de séparation par adsorption. S'il est trop important, on soutire en 25 un débit de gaz résiduaires.

## Revendications

1. Procédé de production combinée et à débits réglables d'azote et d'oxygène, du genre mettant en oeuvre une séparation initiale d'air (1) produisant (en 7) un débit d'azote substantiellement pur et un débit de gaz résiduaires enrichis en oxygène (en 8), dans lequel on traite lesdits gaz résiduaires, par adsorption (16) délivrant un débit réglable d'oxygène substantiellement pur (22), et dans lequel, avant l'adsorption, on soutire un débit excédentaire des gaz résiduaires (en 25) aux gaz résiduaires si la demande en oxygène est inférieure à une valeur nominale, caractérisé en ce que, avant l'adsorption, on adjoint un débit complémentaire d'air (24, 24') aux gaz résiduaires si la demande en oxygène est supérieure à une valeur nominale.

2. Procédé de production combinée d'azote et d'oxygène selon la revendication 1, caractérisé en ce que le traitement par adsorption (1) s'effectue à la pression des gaz résiduaires issus (en 8) de la séparation initiale d'air (1), tandis que la régénération de l'adsorbeur (17-18) (27, 28, 29) s'effectue à la pression nettement inférieure, le cas échéant sous vide (par 23) si la pression des gaz résiduaires de la séparation initiale est seulement peu supérieure à la pression atmosphérique.

3. Procédé de production combiné d'azote et d'oxygène selon la revendication 1, caractérisé en ce que l'on recomprime (en 13) les gaz résiduaires (en 8) de la séparation d'air (1) avant de les traiter par adsorption (16).

4. Procédé de production combinée d'azote et d'oxygène selon l'une des revendications précédentes, caractérisé en ce que la séparation initiale d'air (1) est une distillation cryogénique précédée d'une dessiccation-décarbonatation (3-4).

5. Procédé de production combinée d'azote et d'oxygène selon la revendication 4, caractérisé en ce que l'on traite une partie seulement (via 12) des gaz résiduaires (en 8) par adsorption (en 16), le restant (via 9-10) étant utilisé en tant que vecteur gazeux de régénération de la dessiccation-décarbonatation de l'air (3-4) destiné à la distillation cryogénique (1).

6. Procédé de production combinée d'azote et d'oxygène selon la revendication 4, caractérisé en ce qu'au moins une partie des gaz résiduaires issus (en 8) de la distillation cryogénique (1) est utilisée (via 9-10) pour la régénération de la dessiccation-décarbonatation (3, 4) avant d'être traitée (via 12) par adsorption-dessiccation-décarbonatation (16).

7. Procédé de production combinée d'azote et d'oxygène selon la revendication 4, caractérisé en ce qu'une partie substantielle des gaz résiduaires issus (en 8) de la distillation cryogénique (1) est directement traitée par adsorption (16), l'oxygène issu de l'adsorption (en 22) étant utilisé en tant que vecteur gazeux de régénération de la dessiccation-décarbonatation de l'air (3-4) destiné à la distillation cryogénique.

8. Installation de production combinée d'azote et d'oxygène, du genre comprenant une unité de séparation d'air (1) produisant (en 7) un débit d'azote substantiellement pur et un débit de gaz résiduaires enrichis en oxygène (en 8), et une unité de séparation par adsorption (16), dont l'entrée (telle 14, 15) est raccordée d'une part (via 12) à la sortie (8) des gaz résiduaires de l'unité de séparation d'air (1), et caractérisée en ce que l'entrée est raccordée d'autre part (via 24, 24') à un conduit d'admission d'air complémentaire et des moyens pour envoyer de l'air complémentaire au conduit d'admission.

9. Installation de production combinée d'azote et d'oxygène selon la revendication 8, caractérisée par un compresseur (13) des gaz résiduaires à l'entrée de l'unité d'adsorption (16).

10. Installation de production combinée d'azote et d'oxygène selon la revendication 8, caractérisée par une pompe de régénération sous vide (23) de l'unité d'adsorption (16).

11. Installation de production combinée d'azote et d'oxygène selon la revendication 8 ou 9, caractérisée en ce que l'unité (1) produisant un débit d'azote sustantiellement pur (7) et un débit de gaz résiduaires riches en oxygène (8) est une unité de séparation par distillation cryogénique précédée d'un dessiccateur-décarbonateur (3-4).

12. Installation de production combinée d'azote et d'oxygène selon la revendication 11, caractérisée en ce que la sortie des gaz résiduaires (8) de l'unité de séparation par distillation cryogénique (1) est raccordée directement d'une part à l'entrée de l'unité de séparation par adsorption (16), d'autre part à la sortie du dessiccateur-décarbonateur en cours de régénération (3-4) de l'unité de séparation par séparation cryogénique (1).

13. Installation de production combinée d'azote et d'oxygène selon la revendication 11, caractérisée en ce que la sortie des gaz résiduaires (8) de l'unité de séparation par distillation cryogénique (1) est raccordée d'abord à la sortie du dessiccateur-décarbonateur (3-4) en cours de régénération, dont l'entrée est raccordée à l'unité de séparation par adsorption (16), qui est du type comprenant un lit d'alumine (27b, 28b, 29b).

14. Installation de production combinée d'azote et d'oxygène selon la revendication 11, caractérisée en ce que la sortie de production de l'unité (22) de séparation par adsorption (16) est raccordée, le cas échéant, via un compresseur (31) et un réchauffeur (9), à la sortie du dessiccateur-décarbonateur (3-4) en cours de régénération de l'unité de séparation par distillation cryogénique (1).

## Patentansprüche

1. Verfahren zur kombinierten Herstellung von Stickstoff und Sauerstoff mit regelbarem Durchfluß, bei der eine (in 7) einen im wesentlichen reinen Stickstoffstrom und (in 8) einen sauerstoffangereicherten Restgasstrom erzeugende, erste oder anfängliche Luftzerlegung (1) durchgeführt wird, wobei das Restgas mittels einen im wesentlichen reinen Sauerstoffstrom (22) liefernder Adsorption (16) behandelt wird, und wobei, wenn der Sauerstoffbedarf unter dem Nennwert liegt, vor der Adsorption ein überschüssiger Restgasstrom (in 25) von den Restgasen abgezogen wird, dadurch gekennzeichnet, daß, wenn der Sauerstoffbedarf über dem Nennwert liegt, den Restgasen vor der Adsorption ein Ergänzungsluftstrom (24, 24') zugegeben wird.

2. Verfahren zur kombinierten Herstellung von Stickstoff und Sauerstoff nach Anspruch 1, dadurch gekennzeichnet, daß sich die Behandlung mittels Adsorption (1) unter dem Druck der aus der ersten oder anfänglichen Luftzerlegung (1) stammenden (in 8) Restgase vollzieht, während sich die Regeneration des Adsorbers (17-18) (27, 28, 29) unter deutlich kleinerem Druck vollzieht, gegebenenfalls unter Vakuum (mittels 23), wenn der Druck der Restgase der ersten oder anfänglichen Luftzerlegung nur leicht über Atmosphärendruck liegt.

3. Verfahren zur kombinierten Herstellung von Stickstoff und Sauerstoff nach Anspruch 1, dadurch gekennzeichnet, daß die Restgase (in 8) der Luftzerlegung (1) wiederverdichtet (in 13) werden, bevor sie mittels Adsorption (16) behandelt werden.

4. Verfahren zur kombinierten Herstellung von Stickstoff und Sauerstoff nach einem der vorangehenden Ansprüche, dadurch gekennzeichnet, daß die erste oder anfängliche Luftzerlegung (1) eine einer Trocknung-Entkarbonatisierung (3-4) vorangehende, kryogene Destillation ist.

5. Verfahren zur kombinierten Herstellung von Stickstoff und Sauerstoff nach Anspruch 4, dadurch gekennzeichnet, daß lediglich ein Teil (über 12) der Restgase (in 8) mittels Adsorption (in 16) behandelt wird, wogegen der Rest (über 9-10) als gasförmiger Träger der Regenerierung der Trocknung-Entkarbonatisierung (3-4) der zur kryogenen Destillation (1) bestimmten Luft verwendet wird.

6. Verfahren zur kombinierten Herstellung von Stickstoff und Sauerstoff nach Anspruch 4, dadurch gekennzeichnet, daß mindestens ein Teil des aus der kryogenen Destillation (1) stammenden (in 8) Restgases zur Regeneration der Trocknung-Entkarbonatisierung (3, 4) verwendet wird, bevor es mittels Adsorption-Trocknung-Entkarbonatisierung (16) behandelt wird (über 12).

7. Verfahren zur kombinierten Herstellung von Stickstoff und Sauerstoff nach Anspruch 4, dadurch gekennzeichnet, daß ein wesentlicher Teil des aus der kryogenen Destillation (1) stammenden (in 8) Restgases direkt mittels Adsorption (16) behandelt wird, wobei der aus der Adsorption (in 22) stammende Sauerstoff als gasförmiger Träger der Regeneration der Trocknung-Entkarbonatisierung (3, 4) der zur kryogenen Destillation bestimmten Luft verwendet wird.

8. Vorrichtung zur kombinierten Herstellung von Stickstoff und Sauerstoff, umfassend eine Einheit zur Luftzerlegung (1), die (in 7) einen im wesentlichen reinen Stickstoffstrom und (in 8) einen sauerstoffangereicherten Restgasstrom erzeugt, und eine Einheit zur Zerlegung mittels Adsorption (16), deren Einlaß (14, 15) zum einen (über 12) mit dem Restgasauslaß (8) der Luftzerlegungseinheit (1) verbunden ist, dadurch gekennzeichnet, daß der Einlaß zum anderen (über 24, 24') mit einer Zufuhrleitung für Ergänzungsluft und mit Mitteln zum Einleiten der Ergänzungsluft in die Zufuhrleitung verbunden ist.

9. Vorrichtung zur kombinierten Herstellung von Stickstoff und Sauerstoff nach Anspruch 8, gekennzeichnet durch einen Restgasverdichter (13) am Einlaß der Adsorptionseinheit (16).

10. Vorrichtung zur kombinierten Herstellung von Stickstoff und Sauerstoff nach Anspruch 8, gekennzeichnet durch eine Regenerationsvakuumpumpe (23) der Adsorptionseinheit (16).

11. Vorrichtung zur kombinierten Herstellung von Stickstoff und Sauerstoff nach Anspruch 8 oder 9, dadurch gekennzeichnet, daß die einen im wesentlichen reinen Stickstoffstrom (7) und einen sauerstoffangereicherten Restgasstrom (8) erzeugende Einheit (1) eine einem Trockner-Entkarbonatisierer (3-4) vorgeschaltete Einheit zur Zerlegung mittels kryogener Destillation ist.

12. Vorrichtung zur kombinieren Herstellung von Stickstoff und Sauerstoff nach Anspruch 11, dadurch gekennzeichnet, daß der Restgasauslaß (8) der Einheit zur Zerlegung mittels kryogener Destillation (1) zum einen mit dem Einlaß der Einheit zur Zerlegung mittels Adsorption (16), zum anderen mit dem Auslaß eines Trockner-Entkarbonatisierers (3-4) während der Regeneration der Einheit zur Zerlegung mittels kryogener Zerlegung (1) direkt verbunden ist.

13. Vorrichtung zur kombinierten Herstellung von Stickstoff und Sauerstoff nach Anspruch 11, dadurch gekennzeichnet, daß der Restgasauslaß (8) der Einheit zur Zerlegung mittels kryogener Destillation (1) zunächst mit dem Auslaß des Trockner-Entkarbonatisierers (3-4) während der Regeneration verbunden ist, dessen Einlaß mit der Einheit zur Zerlegung mittels Adsorption (16) verbunden ist, die von dem eine Aluminiumschicht (27b, 28b, 29b) aufweisenden Typ ist.

14. Vorrichtung zur kombinierten Herstellung von Stickstoff und Sauerstoff nach Anspruch 11, dadurch gekennzeichnet, daß der Produktionsauslaß (22) der Einheit zur Zerlegung mittels Adsorption (16) gegebenenfalls über einen Verdichter (31) und einen Erhitzer (9) mit dem Auslaß des Trockner-Entkarbonatisierers (3-4) während der Regeneration der Einheit zur Zerlegung mittels kryogener Destillation (1) verbunden ist.

## Claims

1. Process for the combined production of nitrogen and oxygen with adjustable flow rates, of the type involving an initial air separation (1) producing (in 7) a substantially pure flow of nitrogen and a flow of residual gases enriched in oxygen (in 8), wherein the said residual gases are treated by adsorption (16) delivering an adjustable flow of substantially pure oxygen (22), and wherein, before adsorption, an excess flow of residual gases is withdrawn from the residual gases if the demand for oxygen is less than a nominal value, characterized in that, before adsorption, a complementary flow of air (24, 24') is added to the residual gases if the demand for oxygen is greater than a nominal value.

2. Process for the combined production of nitrogen and oxygen according to claim 1, characterized in that the treatment by adsorption (1) is carried out at the pressure of the residual gases (in 8) coming from the initial separation of air (1), while the adsorber is regenerated (17-18) (27,28,29) at an appreciably lower pressure, where appropriate under vacuum (by 23) if the pressure of the residual gases from the initial separation is only slightly greater than atmospheric pressure.

3. Process for the combined production of nitrogen and oxygen according to claim 1, characterized in that the residual gases (in 8) from the separation of air (1) are recompressed (in 13) before they are treated by adsorption (16).

4. Process for the combined production of nitrogen and oxygen according to one of the preceding claims, characterized in that the initial separation of air (1) is a cryogenic distillation preceded by drying-decarbonation (3-4).

5. Process for the combined production of nitrogen and oxygen according to claim 4, characterized in that only part (via 12) of the residual gases (in 8) is treated by adsorption (in 16), the remainder (via 9-10) being used as a regenerating carrier gas in the drying-decarbonation of air (3-4) intended for cryogenic distillation (1).

6. Process for the combined production of nitrogen and oxygen according to claim 4, characterized in that at least part of the residual gases (in 8) coming from the cryogenic distillation (1) is used (via 9-10) for regeneration in the drying-decarbonation (3,4) process before being treated (via 12) by adsorption-drying decarbonation (16).

7. Process for the combined production of nitrogen and oxygen according to claim 4, characterized in that a substantial part of the residual gases (in 8) coming from the cryogenic distillation (1) is directly treated by adsorption (16), oxygen coming from the adsorption (in 22) being used as a regenerating carrier gas in the drying-decarbonation of air (3-4) intended for cryogenic distillation.

8. Plant for the combined production of nitrogen and oxygen, of the type comprising an air separation unit (1) producing (in 7) a flow of substantially pure nitrogen and a flow of residual gases enriched in oxygen (in 8) and a unit for separation by adsorption (16), the inlet of which (such as 14, 15) is connected on the one hand (via 12), to the outlet (8) for the residual gases from the air separation unit (1), and characterized in that the inlet is connected on the other hand (via 24, 24') to a pipe leading in supplementary air and means for conveying supplementary air to the inlet pipe.

9. Plant for the combined production of nitrogen and oxygen according to claim 8, characterized in that a compressor (13) is provided for residual gases at the inlet to the adsorption unit (16).

10. Plant for the combined production of nitrogen and oxygen according to claim 8, characterized in that a pump is provided for regenerating the adsorption unit (16) under vacuum (23).

11. Plant for the combined production of nitrogen and oxygen according to claim 8 or claim 9 characterized in that the unit (1) producing a flow of substantially pure nitrogen (7) and a flow of residual gases enriched in oxygen (8) is a unit for separation by cryogenic distillation preceded by a drier-decarbonator (3-4).

12. Plant for the combined production of nitrogen and oxygen according to claim 11, characterized in that the outlet for residual gases (8) from the unit for separation by cryogenic distillation (1) is directly connected on the one hand to the inlet of the unit for separation by adsorption (16) and on the other hand to the outlet from the drier-decarbonator during regeneration (3-4) of the unit for the separation by cryogenic separation (1).

13. Plant for the combined production of nitrogen and oxygen according to claim 11, characterized in that the outlet for residual gases (8) from the unit for separation by cryogenic distillation (1) is connected first of all to the outlet from the drier-decarbonator (3-4) during regeneration, the inlet of which is connected to the unit for separation by adsorption (16), which is of the type comprising a bed of alumina (27b, 28b, 29b).

14. Plant for the combined production of nitrogen and oxygen according to claim 11, characterized in that the production outlet from the unit (22) for separation by adsorption (16) is connected, where appropriate, via a compressor (31) and a reheater (9), to the outlet from the drier-decarbonator (3-4) during regeneration of the unit for separation by cryogenic distillation (1).
